# FASCICULE DE BREVET EUROPEEN

(11) **EP 1 641 726 B1**
(45) Date de publication et mention de la délivrance du brevet: **14.05.2008**
(21) Numéro de dépôt: 04767513.7
(22) Date de dépôt: 29.06.2004
(51) Int. Cl.: C04B 30/02

(54) **MATERIAUX D ISOLATION THERMIQUE ET/OU ACOUSTIQUE A BASE DE S ILICE ET PROCEDES POUR LEUR OBTENTION**
SCHALLABSORBIERENDE UND WÄRMEDÄMMENDE KIESELSÄUREHALTIGE MATERIALEN UND VERFAHREN ZUR HERSTELLUNG DERSELBEN
THERMAL AND/OR ACOUSTIC INSULATION MATERIALS MADE FROM SILICA AND METHODS FOR PRODUCTION THEREOF

(30) Priorité: 30.06.2003 FR 0307903
(43) Date de publication de la demande: 05.04.2006
(73) Titulaire: RHODIA CHIMIE, 92512 Boulogne-Billancourt (FR)
(72) Inventeur: HERNANDEZ, Julien, F-92160 ANTONY (FR); ENJALBERT, Catherine, F-95150 TAVERNY (FR)
(74) Mandataire: Colombet, Alain André
(86) Numéro de dépôt international: PCT/FR2004/001669
(87) Numéro de publication internationale: WO 2005/003057

(56) Documents cités:
- EP-A- 0 078 909
- EP-A- 0 520 862
- EP-A- 0 594 469
- DE-A- 10 102 893

## Description

La présente invention a trait à des matériaux poreux à base de silice séchée, généralement sous la forme de panneaux, qui sont particulièrement adaptés à titre de matériaux d'isolation thermique et/ou acoustique. L'invention concerne également un procédé d'obtention de ces matériaux d'isolation.

On connaît actuellement de nombreux types de matériaux destinés à assurer une isolation thermique et/ou acoustique. Ces matériaux, qui se présentent le plus souvent sous la forme de panneaux de forme rectangulaire ou carrée, sont en particulier utilisés dans le domaine de la construction des immeubles et des maisons d'habitation, où ils sont notamment employés pour assurer l'isolation thermique et/ou l'insonorisation des murs et des plafonds.

Le plus souvent, ces panneaux à effet thermo-isolant et/ou insonorisant sont des matériaux à base d'un agglomérat poreux de particules finement divisées, contenant pour l'essentiel des particules ayant une faible conductivité thermique, telles que, par exemple, des particules de noir de carbone, de sulfate de calcium, de carbonate de calcium, de silice pyrogénée et/ou de silice de précipitation sous forme de poudre.

Notamment dans le but d'assurer une tenue mécanique suffisante de ces panneaux isolants, permettant notamment d'envisager leur manipulation en pratique, on incorpore classiquement à leur structure des charges de renforcement, telles que des matières fibreuses.

Une autre utilisation plus spécifique des panneaux thermo-isolants est l'isolation thermique d'enceintes portées à haute température, telles que les enceintes thermiques industrielles (fours ou étuves, par exemple) ou bien des enceintes thermiques de type ménager (comme les fours à pyrolyse, en particulier). Une autre application des panneaux d'isolation thermique dans ce cadre est la fabrication de portes ou parois coupe-feu, destinées en particulier à limiter la propagation de départs de feux ou à circonscrire des incendies.

Dans ces applications particulières, le matériau est en général soumis à des températures fortement variables, comme par exemple à des cycles de montée et descente en température au sein d'un four ou d'une étuve. Ces variations -thermiques ont tendance à induire au sein du matériau des phénomènes de dilatation et de retrait, qui peuvent être inacceptables dans certaines applications, et qui se traduisent en outre le plus souvent par des contraintes mécaniques importantes susceptibles de fragiliser la structure du matériau à plus ou moins long terme. L'incorporation de charges de renforcement permet en général de limiter ces phénomènes, mais elle ne s'avère pas toujours suffisante pour les inhiber et assurer une tenue mécanique satisfaisante du matériau.

De plus, dans le cadre de l'isolation thermique d'enceintes portées à haute température, des propriétés d'isolation thermique particulièrement marquées sont en général requises. Pour obtenir des panneaux isolants ayant des qualités d'isolation thermique adaptées à ce type d'utilisation, on préconise en général d'introduire au sein de leur structure des agents dits *"opacifiants"* tels que des particules de dioxyde de titane par exemple. Ces agents opacifiant réfléchissent, absorbent et/ou dispersent au moins une partie du rayonnement infrarouge, et consolide ainsi l'effet de barrière thermique du matériau. Cela étant, il s'avère que la seule présence de ces agents opacifiants ne permet pas toujours d'obtenir des qualités d'isolation thermique optimales.

Un procédé classique de préparation des panneaux d'isolation thermique et/ou phonique précités consiste à réaliser un compactage à sec de leurs constituants, à savoir une mise sous pression des particules de faible conductivité thermique, généralement en association avec des charges renforçantes, et éventuellement des agents opacifiants. Ce procédé est en général conduit en introduisant ces constituants sous forme d'un mélange de particules finement divisées et/ou de poudres dans une enveloppe poreuse, par exemple un sac ou un coussin en tissu de verre, puis à appliquer une pression élevée (typiquement de l'ordre de 10 bars ou plus à ladite enveloppe, pour lier entre elles les particules de façon à obtenir un matériau compressé ayant une certaine tenue mécanique.

Les panneaux obtenus selon ce procédé de compactage à sec présentent le plus souvent des propriétés physiques et/ou mécaniques insuffisantes. Ainsi, les propriétés d'isolation thermique et acoustique des matériaux réalisés s'avèrent souvent médiocres, en particulier lorsque les particules de faible conductivité thermique entrant dans leur constitution sont des particules de noir de carbone, de sulfate de calcium ou de carbonate de calcium. Des propriétés d'isolation plus acceptables peuvent être obtenues en mettant en oeuvre des particules de silice, toutefois, avec ces particules, on obtient des matériaux ayant des propriétés mécaniques insuffisantes, qui se révèlent en particulier friables et enclins aux craquelures.

De façon à résoudre ce problème, et à obtenir des matériaux présentant à la fois une bonne tenue mécanique et des propriétés d'isolation thermique et phonique intéressante, on a développé des procédés consistant à mettre en oeuvre, au lieu d'une compression de constituants à sec, un séchage d'une pâte aqueuse contenant des particules de silice et d'éventuels additifs. En particulier, le brevet EP 0 594 469 décrit un procédé de préparation de panneaux isolants à base de silice séchée, qui consiste à réaliser le séchage d'une composition aqueuse, obtenue par le mélange d'un gâteau de silice de précipitation délité, additionné d'au moins une charge de renforcement, et éventuellement d'un agent opacifiant. Les matériaux obtenus selon le procédé de EP 0 594 469 présentent une tenue mécanique satisfaisante, associée à des propriétés d'isolation thermiques et phoniques au moins similaires à celles des matériaux obtenus par compactage à sec, et le plus souvent supérieures. A ce sujet, il semble pouvoir être avancé que la mise en oeuvre du séchage d'une pâte aqueuse au lieu d'un compactage à sec permet notamment d'accroître le volume poreux du matériau obtenu *in fine.* Le procédé de EP 0 594 469 s'avère en outre économiquement plus intéressant que le compactage à sec, notamment dans la mesure où il permet de s'affranchir de phases lourdes et onéreuses de mélanges de poudres et de compactage à pression élevée.

Dans les procédés de préparation de panneaux isolants à base de silice séchée du type de ceux décrits dans EP 0 594 469, la composition aqueuse qui est soumise au séchage est en général une pâte de teneur en matière sèche au moins égale à 10%, qui est fluidisée (délitée) avant d'être introduite dans un moule, puis séchée.

Or, les inventeurs ont maintenant découvert qu'il est possible d'améliorer encore les propriétés des matériaux d'isolation obtenus par séchage de compositions aqueuses à base de particules de silice de précipitation, en effectuant le séchage sur une composition aqueuse préalablement compactée, telle qu'un gâteau obtenu par filtration d'une dispersion de silice de précipitation sur filtre-presse.

Dans ce cadre, les travaux réalisés par les inventeurs ont plus spécifiquement permis d'établir qu'il s'avère plus avantageux de conduire une étape de séchage sur un gâteau obtenu en filtrant sur filtre-presse une dispersion aqueuse de particules de silice de précipitation, plutôt que sur un tel gâteau soumis à une étape ultérieure de délitage telle que mise en oeuvre dans le procédé de EP 0 594 469.

En d'autres termes, de façon surprenante, les inventeurs ont découvert qu'il est possible de perfectionner le procédé de EP 0 594 469, en particulier en s'affranchissant d'une des étapes de ce procédé, ce qui permet donc de réaliser des matériaux plus intéressants au moyen d'un procédé moins onéreux. De plus, en effectuant directement le séchage d'un gâteau de silice compacté issu d'un filtre-presse, la mise en oeuvre d'un moule n'est plus nécessaire pour l'étape de séchage, dans la mesure où le gâteau compacté est déjà mis en forme dans le filtre-presse, ce qui limite encore les coûts de production du matériau.

Sans vouloir être lié à une théorie particulière, il semble pouvoir être avancé qu'un séchage réalisé sur une composition aqueuse compactée, au lieu d'une composition délitée telle qu'utilisée dans EP 0 594 469, permet notamment de réduire la taille des pores présents dans le matériau, en général sans réduire de façon conséquente le volume poreux total, ce qui induit en particulier une augmentation des propriétés d'isolation thermique et phonique.

Les matériaux obtenus par les inventeurs se révèlent en outre particulièrement adaptés à une mise en oeuvre sous vide, où ils présentent notamment une bonne tenue mécanique et des propriétés d'isolation thermique intéressantes.

Sur la base des différents éléments ci-dessus, la présente invention vise à fournir un procédé de préparation de matériaux d'isolation de typ\e panneaux de silice séchée ayant des propriétés de tenue mécaniques et d'isolation thermique et/ou phonique au moins similaires, et de préférence supérieures, à celles des panneaux de silice actuellement connus, et ce avec un coût de production réduit par rapport aux procédés de l'état de la technique.

L'invention se fixe également pour but de fournir de nouveaux matériaux à base de silice séchée adaptés à l'isolation thermique et/ou phonique, et de préférence adaptés à une isolation thermique à haute température. Dans ce cadre, l'invention vise en particulier à fournir de tels matériaux sous la forme de panneaux de silice séchée ayant notamment une tenue mécanique suffisante pour permettre leur manipulation. L'invention vise également, de façon spécifique, à fournir de tels matériaux, qui soient adaptés à une mise en oeuvre sous vide, notamment pour réaliser une isolation thermique sous vide.

Ainsi, selon un premier aspect, la présente invention a pour objet un procédé de préparation d'un matériau d'isolation thermique et/ou phonique à base de silice de précipitation séchée, comprenant les étapes consistant à :
(A) filtrer sur filtre-presse une dispersion aqueuse D contenant des particules de silice de précipitation, ce par quoi on obtient un gâteau de filtration compacté ; puis
(B) sécher le gâteau de filtration à l'état compacté tel qu'obtenu à l'issue de l'étape (A).

Par "matériau d'isolation thermique et/ou phonique", on entend, au sens de la présente description, un solide poreux présentant une tenue mécanique suffisante pour être manipulable, et possédant des propriétés d'absorption, de réflexion, et/ou de dispersion des rayonnements thermiques et/ou des ondes acoustiques.

Avantageusement, le matériau d'isolation thermique et/ou phonique préparé selon l'invention a la forme d'un panneau de particules, de préférence de forme rectangulaire ou carrée. Dans le procédé de l'invention, le séchage de l'étape (B) consiste à éliminer substantiellement l'eau comprise dans le gâteau compacté issue de l'étape (A), éventuellement après un démoulage du gâteau compacté obtenu sur le filtre-presse. Dans la mesure où ce gâteau compacté est séché en l'état, l'étape (B) conduit en général essentiellement à l'obtention d'un monobloc solide, dont la forme est conditionnée par le filtre-presse utilisé dans l'étape (A), qui joue le rôle de moule pour le gâteau compacté réalisé.

Par conséquent, lorsqu'on souhaite obtenir un panneau d'isolation de forme donnée, il est le plus souvent avantageux de réaliser l'étape (A) au sein d'un filtre-presse ayant cette forme, par exemple sur un filtre-presse ayant une forme rectangulaire ou carrée.

Alternativement, le gâteau compacté obtenu dans l'étape (A) peut, dans certains cas, être démoulé du filtre-presse, puis découpé selon la forme désirée, préalablement au séchage de l'étape (B). Dans ce cas, il convient toutefois de modifier le moins possible l'état de compactage du gâteau réalisé dans l'étape (A). Pour ce faire, le découpage doit en particulier être réalisé avec le moins de vibrations possible.

Quelle que soit la forme du matériau d'isolation préparé, une des étapes essentielles du procédé de l'invention est l'étape (A), qui vise à fournir un gâteau de filtration compacté. Les travaux réalisés par les inventeurs semblent indiquer que, plus le compactage du gâteau réalisé dans l'étape (A) est important, plus on observe une réduction de la taille des pores présents dans le matériau obtenu suite au séchage de l'étape (B), ce qui améliore les qualités d'isolation. Toutefois, un compactage trop poussé conduit, à l'inverse, à un faible volume poreux pour le matériau, ce qui est préjudiciable pour les propriétés d'isolation. Il convient donc en général d'effectuer le compactage du gâteau de l'étape (A) sous une pression modérée. Ainsi, de préférence, la filtration sur filtre-presse de l'étape (A) comprend un compactage sous une pression comprise entre 2 et 10 bars (c'est-à-dire entre 2.10⁵ Pa et 10.10⁵ Pa). Avantageusement, la pression mise en oeuvre est supérieure ou égale à 3 bars, et plus préférentiellement supérieure ou égale à 4 bars. Par ailleurs, notamment pour limiter au maximum une diminution du volume poreux du matériau obtenu *in fine,* il s'avère souvent avantageux que cette pression soit inférieure ou égale à 8 bars, de préférence inférieure ou égale à 7 bars, et plus préférentiellement inférieure à 6 bars. De façon particulièrement avantageuse, la pression sous laquelle est effectué le compactage de l'étape (a) est ainsi comprise entre 2 et 7 bars, et elle est de préférence comprise entre 4,5 et 5,5 bars (typiquement de l'ordre de 5 bars).

En général, le gâteau de filtration compacté obtenu à l'issue de l'étape (A) a un taux de matière sèche d'au moins 10% en masse, et de préférence d'au 15% en masse, cette teneur restant en général inférieure à 35% en masse. Le plus souvent, on préfère que cette teneur en matière sèche soit comprise entre 20 et 30% (typiquement de l'ordre de 25%). Pour ce faire, la filtration sous pression de l'étape (A) est généralement conduite pendant une durée au moins égale à 10 minutes, typiquement comprise entre 10 et 40 minutes, et de préférence pendant au moins 20 minutes, notamment de façon à permettre l'établissement d'une porosité optimale au sein du matériau.

Selon un mode avantageux, la filtration sous pression de l'étape (A) comprend deux étapes successives, à savoir :
(A1) une filtration sous pression modérée (par exemple entre 0,5 bar et 2 bar, et typiquement à une pression de l'ordre de 1 bar), en général effectuée pendant une durée de 5 à 10 minutes ; puis
(A2) un compactage du gâteau de filtration obtenu à une pression plus élevée que celle de l'étape (A1) (généralement entre 2 et 10 bars, de préférence entre 3 et 8 bars, et avantageusement à une pression de l'ordre de 5 bars, notamment entre 4 et 6 bars), en général pendant une durée d'au moins 2 minutes (voir exemple 1), et le plus souvent pendant 5 à 30 minutes, et avantageusement pendant au moins 15 minutes).

En règle générale, la mise en oeuvre des étapes (A1) et (A2) précitées permet en particulier de réduire le risque de formation de fissures lors de l'étape de séchage ultérieure (B).

Quel que soit le mode de réalisation exact de l'étape (A), cette étape est en général mise en oeuvre à température ambiante (typiquement à une température comprise entre 10 et 30°C). Toutefois, selon certains modes de réalisation, des températures plus élevées peuvent être envisagées (notamment des températures entre 30 et 80° C), par exemple pour permettre d'augmenter la vitesse de la filtration.

La dispersion aqueuse D à base de silice de précipitation qui est soumise à la filtration sur filtre-presse de l'étape (A) peut, de façon générale, être toute dispersion à base de particules de silice de précipitation. Le terme "silice de précipitation", désigne, au sens de la présente description, toute silice obtenue par réaction d'un silicate avec un acide, selon tout mode de préparation, notamment par addition d'un acide sur un pied de cuve de silicate, ou bien par addition simultanée, totale ou partielle, d'acide et de silicate sur un pied de cuve d'eau, ou de silicate. La suspension D est en général une bouillie de silice telle qu'obtenue à l'issue de telles réactions, à laquelle on peut éventuellement ajouter différents additifs.

De préférence, la silice de précipitation présente dans la dispersion aqueuse D est une silice de précipitation qui, une fois séchée, possède une surface spécifique BET comprise entre 80 et 400 m²/g, et de préférence entre 100 et 350 m²/g, et une surface spécifique CTAB comprise entre 80 et 350 m²/g, et de préférence entre 100 et 250 m²/g.

A titre de silices de précipitation particulièrement adaptées à la mise en oeuvre du procédé de l'invention, on peut notamment citer les silices de précipitation obtenues selon les procédés décrits par exemple dans EP 0 520 862, WO 95/09127, WO 95/09128, ou WO 03/016215.

La teneur initiale en matière sèche de la suspension D qui est soumise à la filtration sous pression de l'étape (A) peut varier en une assez large mesure. II est toutefois préférable que cette teneur en matière sèche initiale avant filtration soit comprise entre 5 et 30% , et de préférence entre 15 et 25 % en masse. De préférence, dans la dispersion aqueuse D, la silice de précipitation est le composé solide majoritaire. Ainsi, on préfère que, dans la dispersion D, la silice de précipitation soit présente à raison d'au moins 50% en masse, de préférence à raison d'au moins 75% en masse, et avantageusement d'au moins 80% en masse, par rapport à la masse totale de la matière sèche de la dispersion D.

Le plus souvent, la dispersion aqueuse D mise en oeuvre dans l'étape (A) contient, -en plus de la silice de précipitation, une charge de renforcement. Cette charge est en général destinée à renforcer la tenue mécanique du panneau d'isolation obtenu à l'issue du procédé. Le cas échéant, cette charge de renforcement contient de préférence des fibres de renforcement choisies dans le groupe constitué par les fibres de silicate d'aluminium, les fibres d'alumine, les fibres de laine minérale, les fibres de verre, les fibres de quartz, les fibres céramique, les fibres polymères et les fibres cellulosiques, lesdites fibres de renforcement étant de préférence des fibres de verre ou des fibres polymères telles que des fibres de polyamide.

Quelle que soit la nature de la charge de renforcement mise en oeuvre, on préfère, lorsqu'une telle charge est présente, que, dans la dispersion aqueuse D de l'étape (A), le rapport massique (silice/ charge de renforcement) soit compris entre 75:25 et 99:1, et de préférence entre 85:15 et 98:2.

En particulier lorsqu'on souhaite préparer des matériaux adaptés à l'isolation thermique à haute température, la dispersion aqueuse D mise en oeuvre dans l'étape (A) peut contenir, en plus de silice précipitation et d'une éventuelle charge de renforcement, un agent opacifiant, à savoir un composé capable de réfléchir, absorber et/ou disperser au moins une partie du rayonnement infrarouge. Le cas échéant, cet agent opacifiant jouant le rôle de barrière anti-infrarouge est avantageusement choisi dans le groupe consistant en l'oxyde de chrome, l'oxyde de zirconium, l'oxyde de fer, le dioxyde de titane, le dioxyde de manganèse, l'ilménite, la poudre de quartz, le carbure de silicium, le carbure de bore, le carbure de tantale, le noir de carbone, et le graphite, en général sous forme particulaire. Les particules de dioxyde de titane et de minerais le comprenant, en particulier les particules l'ilménite, constituent des agents opacifiants particulièrement adaptés dans le cadre de la présente invention .

Lorsqu'un agent opacifiant est présent dans la dispersion D mise en oeuvre dans l'étape (A), on préfère en général que le rapport massique (silice/agent opacifiant) au sein de la dispersion aqueuse D soit compris entre 50:50 et 99:1, et de préférence entre 70:30 et 90:10.

Quelle que soit la composition exacte de la dispersion D, l'étape (A) consiste à effectuer une filtration sous pression de cette dispersion, de façon à obtenir un gâteau compacté dont la phase solide a sensiblement la même composition que la phase solide de la suspension D.

En particulier lorsque la suspension D contient des composés solubilisés (tels que des acides ou des sels issus de la réaction de précipitation de la silice, par exemple), il peut s'avérer intéressant que l'étape (A) comprenne un ou plusieurs lavages (par de l'eau et ou des solvants). Le cas échéant, le ou les lavages effectués doivent toutefois être réalisés en veillant à ne pas obtenir un gâteau désagrégé (délité) à l'issue de l'étape (A). En effet, de façon caractéristique, l'étape (B) du procédé de l'invention doit être conduite sur un gâteau de filtration à l'état compacté. De ce fait, lorsque des étapes de lavages sont mises en oeuvre, il est en général préférable qu'elles soient conduite sur le filtre-presse, et avantageusement sous pression, de façon à bien obtenir, préalablement au séchage, un gâteau compacté.

L'étape de séchage (B) du procédé de la présente invention consiste, de façon générale, à éliminer substantiellement l'eau présente dans le gâteau compacté obtenu à l'issue de l'étape (A), en général de façon à obtenir une teneur en eau dans le matériau inférieure ou égale à 15%, et typiquement comprise entre 1 et 10% en masse. Ce séchage s'effectue en général de façon tente, notamment pour optimiser la cohésion des différentes particules et pour éviter la formation de fissures ou de craquelures, qui seraient susceptibles d'affecter les propriétés isolantes du matériau, voire sa tenue mécanique.

Le séchage de l'étape (B) peut être réalisé en laissant le gâteau compacté obtenu à l'issu de l'étape (A) sur le filtre-presse mis en oeuvre pour la filtration. Toutefois, le gâteau compacté obtenu à l'issue de l'étape (A) présente en général une compaction suffisante pour qu'on puisse le démouler du filtre-presse sans affecter de façon sensible son caractère compacté.

Lorsqu'on souhaite effectuer un démoulage du gâteau compacté de l'étape (A) préalablement au séchage de l'étape (B), il est en général avantageux de revêtir la surface interne du filtre-presse avec un agent de démoulage, tel que, par exemple, une huile organique ou une huile silicone, préalablement à la filtration sous pression de l'étape (A). La présence d'un tel agent de démoulage permet de démouler encore plus facilement le gâteau compacté, et donc de perturber encore moins son état de compaction préalablement au séchage.

Selon un premier mode de réalisation, l'étape (B) du procédé de l'invention est conduite en laissant sécher le gâteau de filtration compacté obtenu à l'issue de l'étape (A) à température ambiante, à savoir à une température comprise entre 10 et 30° C, de préférence entre 15 et 25°C. En fonction de la teneur initiale en eau du gâteau compacté et de sa composition, la durée de l'évaporation peut varier en une assez large mesure selon ce premier mode de réalisation. Toutefois, le plus souvent un séchage est obtenu après une duré de l'ordre de 10 à 20 jours, voire en une durée inférieure.

Selon un autre mode de réalisation, l'étape (B) est conduite en soumettant le gâteau de filtration compacté tel qu'obtenu à l'issue de l'étape (A) à une montée progressive en température, généralement de la température ambiante (typiquement 20°C), jusqu'à une température au moins égale à 100°C, voire jusqu'à une température d'au moins 200°C, avec une vitesse de montée en température la plus lente possible; de préférence inférieure à 2°C par minute, et typiquement inférieure ou égale à 0,5°C par minute. De préférence, lorsqu'on met en oeuvre une montée progressive en température, un maintien d'un, deux ou plusieurs paliers de température intermédiaires s'avèrent avantageux. Le plus souvent, l'étape (B) peut être conduite dans les conditions de séchage décrites dans le brevet EP 0 594 469. Par ailleurs, il est souvent avantageux, notamment pour limiter le risque de formation de fissures, que l'étape (B) soit réalisée en contrôlant l'humidité ambiante au cours du séchage.

Selon un autre aspect, la présente invention a également pour objet les matériaux poreux d'isolation thermique et/ou phonique à base de silice de précipitation séchée qui peuvent être obtenus selon le procédé décrit ci-dessus. Ces matériaux se présentent le plus souvent sous la forme de panneaux, généralement de forme rectangulaire ou carré.

Ces matériaux se distinguent notamment des matériaux d'isolation thermique et/ou phonique actuellement connus par une porosité particulière, qui leur confère des propriétés isolantes particulièrement prononcées, et en particulier des propriétés d'isolation thermique importantes.

En règle générale, les matériaux selon la présente invention ont une structure poreuse présentant une faible taille de pores. La "taille de pores" à laquelle il est fait référence ici est la taille des pores telle que déterminée selon la méthode de porosimétrie au mercure, par exemple à l'aide d'un porosimètre du type du porosimètre Micromeritics Autopore III 9420. Dans la méthode de porosimétrie au mercure, la préparation des échantillons poreux testés se fait comme suit : l'échantillon est séché pendant deux heures en étude à 200° C, puis placé dans un récipient à essai dans les 5 minutes suivant sa sortie de l'étude, puis dégazé sous vide, par exemple à l'aide d'une pompe à tiroirs rotatifs ; les diamètres de pores sont calculés par la relation de Washburn avec un angle de contact téta égal à 140° et une tension superficielle gamme égale à 484 N/m (ou Dynes/cm).

Des mesures de porosité au mercure selon la méthode précitée permettent de mettre en évidence que, dans un matériau d'isolation selon l'invention, une proportion importante dés pores présents sont des pores ayant une taille inférieure à 1000 nm.

Ainsi, en règle générale, on constate, par des mesures de porosimétrie au mercure, que, dans un matériau selon l'invention, le volume poreux des pores de taille inférieure à 1000 nm représente au moins 40%, et le plus souvent au moins 50% du volume poreux total du matériau. Dans la plupart des cas, dans les matériaux obtenus selon le procédé de la présente invention, le volume poreux des pores de taille inférieure à 1000 nm représente au moins 60%, voire au moins 70% du volume poreux total.

En outre, on constate le plus souvent que parmi les pores de taille inférieure à 1000 nm présents dans un matériau selon l'invention, les pores de taille inférieure à 100 nm sont majoritaires. Ainsi, par porosimétrie au mercure, on observe que le volume poreux des pores de taille inférieure à 100 nm représente au moins 50%, en général au moins 60%, et avantageusement au moins 70% du volume poreux des pores de taille inférieure à 1000 nm. En règle générale, cette proportion en pores de dimension inférieure à 100 nm est d'autant plus élevée que la pression sous laquelle est conduite la filtration de l'étape (A) est importante.

En plus des tailles de pores relativement faibles précitées, un matériau selon la présente possède en général un volume poreux total relativement important. Par "volume poreux", on entend ici le volume de la porosité accessible du matériau, tel que déterminée par la méthode de porosimétrie au mercure précitée. Ce volume poreux total est généralement compris entre 1 et 5 cm³/g (entre 1 et 5 mUg), et le plus souvent entre 1,2 et 4 cm³/g, ce volume poreux total étant de préférence supérieur à 1,5 cm³/g, et avantageusement au moins égal à 2 cm³/g, voire au moins égal à 2,5 cm³/g. En général, le volume poreux des pores de taille inférieure à 100 nm est quant à lui au moins égal à 1 cm³/g, le plus souvent au moins égal à 1,1 cm³/g, et de préférence au moins égal à 1 cm³/g. Des matériaux ayant des volumes poreux importants sont en général obtenus lorsque la pression sous laquelle est conduite la filtration de l'étape (A) est relativement réduite, typiquement lorsque cette pression est de l'ordre de 5 bars ou moins (par exemple entre 2 et 5,5 bars). Pour obtenir des matériaux de volume poreux important, il convient toutefois, le plus souvent, de conduire l'étape (A) sous une pression importante, avantageusement au moins égale à 3 bars, et de préférence à 4 bars, notamment de façon à obtenir une tenue mécanique du matériau la plus élevée possible.

Dans la mesure où il est obtenu par séchage du gâteau de filtration obtenu par filtration de la dispersion D mise en oeuvre dans l'étape (A), un matériau d'isolation selon l'invention a en général une composition extrêmement similaire, et le plus souvent identique, à celle de la phase solide de la dispersion aqueuse D. Ainsi, en général, un matériau selon l'invention est majoritairement constitué de silice de précipitation séché, c'est-à-dire à raison d'au moins 50% en masse, de préférence à raison d'au moins 75% en masse, et avantageusement d'au moins 80% en masse, par rapport à la masse totale du matériau.

Selon la nature de la dispersion D mise en oeuvre dans son procédé d'obtention, un matériau selon l'invention peut également comprendre d'autres éléments que de la silice séchée, et en particuliers des additifs tels qu'une charge renforçante et/ou un agent opacifiant.

Selon un mode de réalisation avantageux, un matériau selon l'invention est un matériau obtenu à partir d'une dispersion D comprenant, en plus de silice de précipitation, une charge de renforcement. En général, un tel matériau comprend :
- de 75 à 99% en masse, et de préférence de 85 à 98 % en masse, de silice sèche ; et
- de 1 à 25 % en masse et de préférence de 1,5 à 10% en masse de charge renforçante.

Un matériau selon ce mode de réalisation est particulièrement adapté à titre de matériau d'isolation thermique et phonique des murs ou plafonds d'immeubles ou d'habitations. Ses capacités d'isolation thermique le rendent également adapté à titre de matériau coupe-feu.

Selon un autre mode de réalisation, un matériau selon l'invention est un matériau obtenu à partir d'une dispersion D comprenant, en plus de silice de précipitation, un agent opacifiant, et éventuellement une charge de renforcement.

En général, un tel matériau comprend :
- de 50 à 90% en masse, et de préférence de 65 à 75% en masse, de silice sèche;
- de 9 à 50%, et de préférence de 20 à 30% en masse d'un agent opacifiant ; et
- de 0 à 15 % en masse, de préférence au moins 0,5% en masse, et avantageusement entre 1 et 10% en masse de charge de renforcement.

Un matériau selon ce mode de réalisation spécifique est particulièrement destiné à réaliser une isolation thermique à haute température, en particulier pour l'isolation d'enceintes portées à hautes températures, ou à titre de matériaux constitutifs de barrières coupe-feu. Ces matériaux sont également adaptés aux utilisations d'isolation thermique et phonique plus usuelles telles que l'isolation des murs et plafonds.

De façon plus générale, les matériaux obtenus selon le procédé de l'invention se révèlent utiles à titre de matériau d'isolation thermique et/ou phonique, et en particulier pour l'isolation thermique sous pression réduite.

Cette utilisation générale des matériaux selon l'invention ainsi que les différentes utilisations particulières des matériaux spécifiques précités constituent un autre objet de la présente invention,

Différentes caractéristiques et avantages de l'invention apparaîtront de façon encore plus nette au vu des exemples illustratifs donnés ci-après.

### EXEMPLE 1 : fabrication d'un panneau de silice isolant

Dans un réacteur en acier inoxydable de 25 L, on a introduit 6,7 L d'une solution aqueuse de silicate de sodium ayant un ratio massique SiO₂/Na₂O (Rp) égal à 3,48, et une concentration en SiO₂ égale à 5 g/L. La solution a alors été mise sous agitation, et portée à 80°C. En maintenant la température à 80°C, on a ajouté une solution aqueuse d'acide sulfurique de concentration égale à 80 g/L jusqu'à ce que le pH du milieu atteigne la valeur de 4.

En maintenant toujours le milieu à 80° C, on a introduit dans le réacteur, de façon simultanée :
- une solution (S1) aqueuse de silicate de sodium ayant une concentration 230 g/L et un RP égal à 3,48, avec un débit de 50 g/minute ; et
- une solution (S2) aqueuse d'acide sulfurique de concentration 80 g/L, avec un débit régulé de façon à maintenir le pH du milieu réactionnel à une valeur de 4 dans toute la durée de l'addition simultanée du silicate de sodium et de l'acide sulfurique.

L'addition simultanée des solutions (S1) et (S2) dans les conditions précitées a été conduite pendant 80 minutes.

Au terme des 80 minutes d'addition simultanée, l'introduction de la solution (S)2 a été stoppée et l'introduction de la solution (S1) a été maintenue jusqu'à ce que le pH du milieu atteigne une valeur de 8.

Une fois la valeur du pH de 8 atteinte, on a à nouveau réalisé une addition conjointe des solutions (S1) et (S2), pendant 20 minutes, toujours avec un débit de la solution S1 de 50 g/minute et avec un débit de la solution (S2) régulé de façon à maintenir le pH du milieu réactionnel constamment à une valeur de 8 pendant toute la durée de cette seconde addition simultanée.

A l'issue de cette seconde addition simultanée de 20 minutes, on a arrêté l'addition de la solution (S1) et on a amené le milieu réactionnel à un pH de 4 par addition de solution (S2) d'acide sulfurique. Durant toutes ces étapes, le milieu a été maintenu à une température de 80°C.

A l'issue de ces différentes réactions, on a obtenu une bouillie réactionnelle dont on a prélevé 250 ml.

Dans ces 250 ml de bouillie réactionnelle, on a ajouté, sous agitation, 2 ml d'une solution de FA10 (polyoxyéthylène de masse molaire égale à 5.10⁶ mol/g) à une concentration de 1 % en masse. Le mélange obtenu a été introduit dans un filtre-presse de diamètre interne égal à 7 cm. On a appliqué une pression de 1 bar de façon à effectuer un premier retrait de l'eau contenue dans la bouillie réactionnelle. On a ainsi obtenu un gâteau qu'on a ensuite lavé avec deux fois 150 ml d'eau déminéralisée avec une pression exercée lors du lavage de 1 bar. Suite à ces étapes de lavage (conduites sur le filtre-presse), on a augmenté la pression du filtre-presse à 5 bars et on a maintenu cette pression pendant 2 minutes. On a ainsi obtenu un gâteau de silice caractérisé par un extrait sec de 22% en masse. Ce gâteau concentré a été démoulé du filtre-presse et mis à sécher. Le gâteau ainsi mis en forme a été mis à sécher à température ambiante et démoulé.

Au bout de 15 jours, on a obtenu un gâteau séché ayant un extrait sec de 95%, constituant un panneau de silice ayant les caractéristiques suivantes :
- densité : 0,27,
- volume poreux total : 3,63 cm³/g, avec la répartition poreuse suivante :
   - pores de taille supérieure à 100 mm : 31 %
   - pores de taille comprise entre 100 et 1000 mm : 29%
   - pores de taille inférieure à 100 mm : 40%.

### EXEMPLE 2 : Préparation d'un panneau de silice isolant

On a réalisé un gâteau de silice selon le procédé décrit dans l'exemple 1 de EP 520 862. Le gâteau, tel qu'obtenu à l'issu de l'étape de filtration sur filtre-presse, qui a un extrait sec de 21%, a été dilué par de l'eau de façon à obtenir une suspension de silice (dite bouillie ou "slurry") ayant un extrait sec de 13,5% en masse, et le pH de cette suspension de silice a été porté à 5 par addition d'acide sulfurique (solution aqueuse à 80 g/L).

A 100 g de la suspension de silice précédemment préparée (d'extrait sec de 13,5% en masse, et de pH égal à 5), on a ajouté, sous agitation, une dispersion de 1 g de fibres de polyamide, de longueur moyenne égale à 4 mm et de diamètre moyen égal à 200 microns.

Le mélange obtenu a ensuite été filtré sur le filtre-presse utilisé dans l'exemple 1 précédent (filtre-presse de diamètre interne égal à 7 cm). On a appliqué une pression de compactage de 5 bars, suite à laquelle on a obtenu un taux compacté ayant un extrait sec de 27% en masse. Le gâteau mise en forme ainsi obtenu a été démoulé et mis à sécher à température ambiante comme dans l'exemple précédent. Au bout de 10 jours, on a obtenu un gâteau séché d'extrait sec égal à 95%. On a ainsi obtenu un panneau de silice ayant une bonne tenue mécanique et une densité de 0,4 .

Le panneau de silice obtenu présente un volume poreux total égal à 3,3 ml/g, avec un volume poreux des pores de dimensions inférieures à 100 nm égal à 1,2 ml/g.

### EXEMPLE 3 : Mesures de conductivité thermique

On a réalisé des mesures de conductivité thermique, à l'aide d'un CT-mètre, sur les deux panneaux de silice des exemples 1 et 2. Le principe utilisé est celui dit "de la sonde à choc thermique", qui s'apparente à méthode utilisée selon la norme ISO 8814-1.

Plus précisément, on a mesuré le coefficient de conductivité thermique des panneaux de silice des exemples 1 et 2 à différentes pressions, de la façon suivante : on a placé une sonde thermique au sein du matériau qui est à caractériser.

Après avoir stabilisé thermiquement le milieu à température ambiante (20° C), on a perturbé l'équilibre thermique du matériau en générant un flux de chaleur au moyen de l'élément chauffant de la sonde.

A l'aide d'un capteur de température intégré à la sonde introduite dans le matériau, on a enregistré l'évolution de la température du matériau. On a observé une évolution de la température répondant à une équation du type T(t) = Q/(4πλ) x (Ln(t) + A) dans laquelle :
T désigne la température en °C enregistrée par le capteur de températures,
t représente le temps en secondes,
Q représente le flux de chaleur en W/m,
λ désigne la conductivité thermique du matériau en W/m/K,
A représente une constante.

Par régression linéaire, on a établi la conductivité thermique du matériau à différentes pressions.

Les mesures ont été réalisées sur chacun des matériaux en pression croissante, à 5 pressions différentes, de 0,03 mbar (3 Pa) jusqu'à la pression atmosphérique .

Les résultats obtenus sont reportés dans les tableaux 1 et 2 ci-après.

**Tableau 1 :**

| ***Mesure de la conductivité thermique pour le matériau de l'exemple 1*** | |
|---|---|
| Pression(Pa) | Conductivité thermique (mW/m/K) |
| 3 | 14,6 |
| 100 | 16,0 |
| 1010 | 1,1 |
| 20600 | 32,3 |
| 99600 | 38,8 |

**Tableau 2 :**

| ***Mesure* de *la conductivité thermique pour le matériau* de *l'exemple 2*** | |
|---|---|
| Pression (Pa) | Conductivité thermique (mW/m/K) |
| 3 | 12,7 |
| 100 | 22,3 |
| 1000 | 31,5 |
| 23200 | 39,4 |
| 99500 | 45,4 |

## Revendications

1. Procédé de préparation d'un matériau d'isolation thermique et/ou phonique à base de silice de précipitation séchée, comprenant les étapes consistant à :
(A) filtrer sur filtre-presse une dispersion aqueuse D contenant des particules de silice de précipitation, ce par quoi on obtient un gâteau de filtration compacté ; puis
(B) sécher le gâteau de filtration à l'état compacté tel qu'obtenu à l'issue de l'étape (A).

2. Procédé selon la revendication 1, **caractérisée en ce que** la filtration sur filtre-presse de l'étape (A) comprend un compactage sous une pression comprise entre 2 et 10 bars, et de préférence entre 3 et 8 bars.

3. Procédé selon la revendication 1 ou 2, **caractérisé en ce que** l'étape (A) comprend :
(A1) une filtration sous pression modérée ; puis
(A2) un compactage du gâteau de filtration obtenu à une pression étant comprise entre 2 et 10 bars, et de préférence entre 3 et 8 bars.

4. Procédé selon l'une des revendications 1 à 3, **caractérisé en ce que** le gâteau de filtration compacté obtenu à l'issue de l'étape (A) a un taux de matière sèche compris entre 10 et 35% en masse, et de préférence entre 20 et 30% en masse.

5. Procédé selon l'une quelconque des revendications 1 à 4, **caractérisé en ce que** la dispersion aqueuse D mise en oeuvre dans l'étape (A) contient une silice de précipitation qui, une fois séchée, possède une surface spécifique BET comprise entre 80 et 400 m²/g et une surface spécifique CTAB comprise entre 80 et 350 m²/g.

6. Procédé selon l'une quelconque des revendications 1 à 5, **caractérisé en ce que** la dispersion aqueuse D mise en oeuvre dans l'étape (A) contient en outre une charge de renforcement.

7. Procédé selon la revendication 6, **caractérisé en ce que** ladite charge de renforcement contient des fibres de renforcement choisies dans le groupe constitué par les fibres de silicate d'aluminium, les fibres d'alumine, les fibres de laine minérale, les fibres de verre, les fibres de quartz, les fibres céramiques, les fibres polymères, et les fibres cellulosiques.

8. Procédé selon la revendication 6 ou la revendication 7, **caractérisé en ce que** le rapport massique (silice/ charge de renforcement) au sein de la dispersion aqueuse D est compris entre 75:25 et 99:1 en masse.

9. Procédé selon l'une quelconque des revendications 1 à 8, **caractérisé en ce que** la dispersion aqueuse D mise en oeuvre dans l'étape (A) contient en outre un agent opacifiant, capable de réfléchir, absorber et/ou disperser au moins une partie du rayonnement infrarouge.

10. Procédé selon la revendication 9, **caractérisé en ce que** l'agent opacifiant est choisi dans le groupe consistant en l'oxyde de chrome, l'oxyde de zirconium, l'oxyde de fer, le dioxyde de titane, le dioxyde de manganèse, l'ilménite, la poudre de quartz, le carbure de silicium, le carbure de bore, le carbure de tantale, le noir de carbone, et le graphite, le dioxyde de titane étant préféré.

11. Procédé selon la revendication 9 ou selon la revendication 10, **caractérisé en ce que** le rapport massique (silice/agent opacifiant) est compris entre 50:50 et 99:1 au sein de la dispersion aqueuse D.

12. Procédé selon l'une quelconque des revendications 1 à 11, **caractérisé en ce que** l'étape (B) est conduite en laissant sécher le gâteau de filtration compacté obtenu à l'issue de l'étape (A) à une température comprise entre 10 et 30°C.

13. Procédé selon l'une quelconque des revendications 1 à 12, **caractérisé en ce que** l'étape (B) est conduite en soumettant le gâteau de filtration compacté tel qu'obtenu à l'issue de l'étape (A) à une montée progressive en température, de la température ambiante jusqu'à une température au moins égale à 100° C, avec une vitesse de montée en température inférieure à 2°C par minute, avec de préférence un maintien d'un, deux ou plusieurs paliers de température intermédiaires.

14. Matériau poreux d'isolation thermique et/ou phonique à base de silice de précipitation séchée, susceptible d'être obtenu selon le procédé de l'une quelconque des revendications 1 à 13.

15. Matériau selon la revendication 14, **caractérisé en, ce qu'**il a la forme d'un panneau, de forme rectangulaire ou carré.

16. Matériau selon la revendication 14 ou selon la revendication 15, dans lequel le volume poreux des pores de taille inférieure à 1000 nm représente au moins 40%, et de préférence au moins 50%, du volume poreux total du matériau.

17. Matériau selon la revendication 15 ou 16, dans lequel le volume poreux des pores de taille inférieure à 100 nm représente au moins 50%, et de préférence au moins 60%, du volume poreux des pores de taille inférieure à 1000 nm.

18. Matériau selon l'une quelconque des revendications 14 à 17, **caractérisé en ce qu'**il a un volume poreux total compris entre 1 et 5 cm³/g.

19. Matériau selon l'une quelconque des revendications 14 à 18, **caractérisé en ce qu'**il a un volume poreux des pores de taille inférieure à 100 nm au moins égal à 1 cm³/g.

20. Matériau d'isolation thermique et/ou phonique à base de silice de précipitation séchée, comprenant en outre une charge de renforcement, susceptible d'être obtenu selon le procédé de l'une quelconque des revendications 6 à 8.

21. Matériau selon la revendication 19, **caractérisé en ce qu'**il comprend :
- de 75 à 99% en masse de silice sèche ; et
- de 1 à 25 % en masse de charge renforçante.

22. Matériau d'isolation thermique et/ou phonique à base de silice de précipitation séchée, comprenant en outre un agent opacifiant, susceptible d'être obtenu selon le procédé de l'une quelconque des revendications 9 à 11.

23. Matériau selon la revendication 22, **caractérisé en ce qu'**il comprend :
- de 50 à 90% en masse de silice sèche;
- de 9 à 50% en masse d'un agent opacifiant ; et
- de 0 à 15 % en masse de charge de renforcement.

24. Utilisation d'un matériau selon l'une quelconque des revendications 14 à 22, à titre de panneau d'isolation thermique ou phonique.

25. Utilisation d'un matériau selon l'une quelconque des revendications 14 à 22, à titre de panneau d'isolation thermique sous pression réduite.

26. Utilisation d'un matériau selon la revendication 19 ou 20, à titre de matériau d'isolation thermique et phonique de murs ou plafonds d'immeubles ou d'habitations, ou à titre de matériau coupe-feu

27. Utilisation d'un matériau selon la- revendication 21 ou 22, à titre de matériaux d'isolation à haute température, en particulier pour l'isolation d'une enceinte portée à haute température, ou à titre de matériau constitutif d'une barrière coupe-feu.

## Claims

1. Method for preparing a thermal and/or acoustic insulating material based on dried precipitated silicon dioxide, comprising the steps involving:
(A) filtering in a filter press an aqueous dispersion D containing particles of precipitated silicon dioxide, by means of which a compacted filtration cake is obtained; then
(B) drying the filtration cake in the compacted state as obtained following step (A).

2. Method according to claim 1, **characterised in that** the filtration on the filter press of step (A) involves a compacting operation at a pressure of between 2 and 10 bar, and preferably between 3 and 8 bar.

3. Method according to claim 1 or 2, **characterised in that** step (A) involves:
(A1) filtering at moderate pressure; then
(A2) compacting the filtration cake obtained at a pressure of between 2 and 10 bar and preferably between 3 and 8 bar.

4. Method according to any one of claims 1 to 3,
**characterised in that** the compacted filtration cake obtained following step (A) has a proportion of dry material of between 10 and 35% by mass, and preferably between 20 and 30% by mass.

5. Method according to any one of claims 1 to 4,
**characterised in that** the aqueous dispersion D used in step (A) contains a precipitated silicon dioxide which, once dried, has a specific BET surface-area of between 80 and 400 m²/g and a specific CTAB surface-area of between 80 and 350 m²/g.

6. Method according to any one of claims 1 to 5,
**characterised in that** the aqueous dispersion D used in step (A) further contains a reinforcing filler.

7. Method according to claim 6, **characterised in that** the reinforcing filler contains reinforcing fibres selected from the group constituted by fibres of aluminium silicate, alumina fibres, mineral wool fibres, glass fibres, quartz fibres, ceramic fibres, polymer fibres and cellulose fibres.

8. Method according to claim 6 or claim 7, **characterised in that** the mass ratio (silicon dioxide/reinforcing filler) in the aqueous dispersion D is between 75:25 and 99:1 by mass.

9. Method according to any one of claims 1 to 8,
**characterised in that** the aqueous dispersion D used in step (A) further contains an opacifying agent, which is capable of reflecting, absorbing and/or dispersing at least part of the infrared radiation.

10. Method according to claim 9, **characterised in that** the opacifying agent is selected from the group comprising chromium oxide, zirconium oxide, iron oxide, titanium dioxide, manganese dioxide, ilmenite, quartz powder, silicon carbide, boron carbide, tantalum carbide, carbon black and graphite, with titanium dioxide being preferred.

11. Method according to claim 9 or according to claim 10,
**characterised in that** the mass ratio (silicon dioxide/opacifying agent) is between 50:50 and 99:1 in the aqueous dispersion D.

12. Method according to any one of claims 1 to 11,
**characterised in that** step (B) is carried out by allowing the compacted filtration cake obtained following step (A) to dry at a temperature of between 10 and 30°C.

13. Method according to any one of claims 1 to 12,
**characterised in that** step (B) is carried out by subjecting the compacted filtration cake as obtained following step (A) to a progressive increase in temperature, from ambient temperature to a temperature which is at least equal to 100°C, with a temperature increase rate of less than 2°C per minute, preferably with one, two or more intermediate temperature stages being maintained.

14. Porous thermal and/or acoustic insulating material based on dried precipitated silicon dioxide, which is capable of being obtained in accordance with the method of any one of claims 1 to 13.

15. Material according to claim 14, **characterised in that** it is in the form of a rectangular or square panel.

16. Material according to claim 14 or according to claim 15, wherein the pore volume of the pores which are smaller than 1000 nm represents at least 40%, and preferably at least 50%, of the total pore volume of the material.

17. Material according to claim 15 or 16, wherein the pore volume of the pores which are smaller than 100 nm represents at least 50%, and preferably at least 60%, of the pore volume of the pores smaller than 1000 nm.

18. Material according to any one of claims 14 to 17,
**characterised in that** it has a total pore volume of between 1 and 5 cm³/g.

19. Material according to any one of claims 14 to 18,
**characterised in that** it has a pore volume of pores which are smaller than 100 nm at least equal to 1 cm³/g.

20. Thermal and/or acoustic insulating material which is based on dried precipitated silicon dioxide, further comprising a reinforcing filler, and which is capable of being obtained in accordance with the method of any one of claims 6 to 8.

21. Material according to claim 19, **characterised in that** it comprises:
- from 75 to 99% by mass of dry silicon dioxide; and
- from 1 to 25% by mass of reinforcing filler.

22. Thermal and/or acoustic insulating material which is based on dried precipitated silicon dioxide, further comprising an opacifying agent, and which is capable of being obtained in accordance with the method of any one of claims 9 to 11.

23. Material according to claim 22, **characterised in that** it comprises:
- from 50 to 90% by mass of dry silicon dioxide;
- from 9 to 50% by mass of an opacifying agent; and
- from 0 to 15% by mass of reinforcing filler.

24. Use of a material according to any one of claims 14 to 22, as a thermal or acoustic insulating panel.

25. Use of a material according to any one of claims 14 to 22, as a thermal insulating panel at reduced pressure.

26. Use of a material according to claim 19 or 20, as a material for thermal and acoustic insulation of walls or ceilings of buildings or residences, or as a fire-resistant material.

27. Use of a material according to claim 21 or 22, as high-temperature insulating materials, in particular for the insulation of a chamber which is brought to high temperature, or as a constituent material of a fire-resistant barrier.

## Patentansprüche

1. Verfahren zum Herstellen eines thermischen und/oder phonischen Isolationsmaterials auf Basis von getrockneter Fällungskieselsäure, umfassend die folgenden Schritte:
(A) Filtrieren einer wässrigen Dispersion D, die Fällungskieselsäurepartikel enthält auf einem Pressfilter, wodurch ein kompakter Filterkuchen erhalten wird; anschließend
(B) Trocknen des Filterkuchens im kompakten Zustand, wie er in Schritt (A) erhalten wurde.

2. Verfahren nach Anspruch 1, **dadurch gekennzeichnet, dass** die Filtration auf dem Pressfilter von Schritt (A) eine Verdichtung unter einem Druck im Bereich zwischen 2 und 10 bar und vorzugsweise zwischen 3 und 8 bar umfasst.

3. Verfahren nach Anspruch 1 oder 2, **dadurch gekennzeichnet, dass** der Schritt (A) umfasst:
(A1) Eine Filtration unter moderatem Druck; anschließend
(A2) Eine Verdichtung des Filterkuchens, der unter einem Druck im Bereich zwischen 2 und 10 bar und vorzugsweise zwischen 3 und 8 bar erhalten wurde.

4. Verfahren nach einem der Ansprüche 1 bis 3, **dadurch gekennzeichnet, dass** der verdichtete Filterkuchen, der in dem Schritt (A) erhalten wurde, einen Gehalt an Trockenmaterie im Bereich zwischen 10 und 35 Massenprozent und vorzugsweise zwischen 20 und 30 Massenprozent aufweist.

5. Verfahren nach einem der Ansprüche 1 bis 4, **dadurch gekennzeichnet, dass** die wässrige Dispersion D, die in Schritt (A) eingesetzt wird, eine Fällungskieselsäure enthält, die im getrockneten Zustand eine spezifische Oberfläche nach BET im Bereich zwischen 80 und 400 m²/g aufweist und eine spezifische Oberfläche nach CTAB im Bereich zwischen 80 und 350 m²/g aufweist.

6. Verfahren nach einem der Ansprüche 1 bis 5, **dadurch gekennzeichnet, dass** die wässrige Dispersion D, die in Schritt (A) eingesetzt wird, zusätzlich einen verstärkenden Füllstoff enthält.

7. Verfahren nach Anspruch 6, **dadurch gekennzeichnet, dass** der verstärkende Füllstoff Verstärkungsfasern enthält, ausgewählt aus der Gruppe, bestehend aus Aluminiumsilicatfasern, Tonerdefasern, Fasern aus Mineralwolle, Glasfasern, Quarzfasern, Keramikfasern, Polymerfasern und Cellulosefasern.

8. Verfahren nach Anspruch 6 oder nach Anspruch 7, **dadurch gekennzeichnet, dass** das Massenverhältnis (Kieselsäure/verstärkender Füllstoff) in der wässrigen Dispersion D zwischen 75:25 und 99:1 Massenprozent beträgt.

9. Verfahren nach einem der Ansprüche 1 bis 8, **dadurch gekennzeichnet, dass** die wässrige Dispersion D, die in schritt (A) eingesetzt wird, zusätzlich ein opazifizierendes Mittel enthält, das dazu in der Lage ist, zumindest einen Teil der Infrarotstrahlung zu reflektieren, zu absorbieren und/oder zu streuen.

10. Verfahren nach Anspruch 9, **dadurch gekennzeichnet, dass** das opazifizierende Mittel ausgewählt ist aus der Gruppe, bestehend aus Chromoxid, Zirkonoxid, Eisenoxid, Titandioxid, Mangandioxid, Ilmenit, Quartzpuder, Siliciumcarbid, Borcarbid, Tantalcarbid, Kohlenstoffschwarz und Graphit, wobei Titandioxid bevorzugt ist.

11. Verfahren nach Anspruch 9 oder nach Anspruch 10, **dadurch gekennzeichnet, dass** das Massenverhältnis (Kieselsäure/opazifizierendes Mittel) zwischen 50:50 und 99:1 in der wässrigen Dispersion D beträgt.

12. Verfahren nach einem der Ansprüche 1 bis 11, **dadurch gekennzeichnet, dass** der Schritt (B) durchgeführt wird, indem der kompakte Filterkuchen, der in Schritt (A) erhalten wird, bei einer Temperatur zwischen 10 und 30°C getrocknet wird.

13. Verfahren nach einem der Ansprüche 1 bis 12, **dadurch gekennzeichnet, dass** der Schritt (B) durchgeführt wird, indem der kompakte Filterkuchen, wie er in Schritt (A) erhalten wird, einem progressiven Temperaturanstieg unterworfen wird, ausgehend von Raumtemperatur bis zu einer Temperatur von mindestens 100°C, mit einer Geschwindigkeit der Temperaturanhebung von weniger als 2°C pro Minute, vorzugsweise mit dem Einhalten einer, zweier oder mehrerer Temperaturzwischenstufen.

14. Poröses, thermisches und/oder phonisches Isolationsmaterial auf Basis von getrockneter Fällungskieselsäure, erhältlich über ein Verfahren nach einem der Ansprüche 1 bis 13.

15. Material nach Anspruch 14, **dadurch gekennzeichnet, dass** es in Form einer rechtwinkligen oder quadratischen Platte vorliegt.

16. Material nach Anspruch 14 oder nach Anspruch 15, in dem das Porenvolumen der Poren mit einer Größe unterhalb von 1000 nm mindestens 40% und vorzugsweise mindestens 50% des Gesamtporenvolumens des Materials ausmacht.

17. Material nach Anspruch 15 oder 16, in dem das Porenvolumen der Poren mit einer Größe unterhalb von 100 nm mindestens 50% und vorzugsweise mindestens 60% des Porenvolumens der Poren, mit einer Größe unterhalb 1000 nm, ausmacht.

18. Material nach einem der Ansprüche 14 bis 17, **dadurch gekennzeichnet, dass** es ein Gesamtporenvolumen im Bereich von 1 und 5 cm³/g aufweist.

19. Material nach einem der Ansprüche 14 bis 18, **dadurch gekennzeichnet, dass** es ein Porenvolumen an Poren mit einer Größe unterhalb von 100 nm von mindestens 1 cm³/g aufweist.

20. Thermisches und/oder phonisches Isolationsmaterial auf Basis von getrockneter Fällungskieselsäure, zusätzlich umfassend einen verstärkenden Füllstoff, erhältlich nach einem Verfahren gemäß einem der Ansprüche 6 bis 8.

21. Material nach Anspruch 19, **dadurch gekennzeichnet, dass** es umfasst:
- von 75 bis 99 Massenprozent getrocknete Kieselsäure;
- von 1 bis 25 Massenprozent verstärkenden Füllstoff.

22. Thermisches und/oder phonisches Isolationsmaterial auf Basis von getrockneter Fällungskieselsäure, zusätzlich enthaltend ein opazifizierendes Mittel, erhältlich durch ein Verfahren nach einem der Ansprüche 9 bis 11.

23. Material nach Anspruch 22, **dadurch gekennzeichnet, dass** es umfasst:
- von 50 bis 90 Massenprozent getrocknete Kieselsäure;
- von 9 bis 50 Massenprozent eines opazifizierenden Mittels;
- von 0 bis 15 Massenprozent verstärkenden Füllstoff.

24. Verwendung eines Materials nach einem der Ansprüche 14 bis 22 als thermische oder phonische Isolationsplatte.

25. Verwendung eines Materials nach einem der Ansprüche 14 bis 22 als thermische Isolationsplatte unter verringertem Druck.

26. Verwendung eines Materials nach Anspruch 19 oder 20 als thermisches und phonisches Isolationsmaterial von Mauern oder Decken von Gebäuden oder Wohnungen oder als Brandschutzmaterial.

27. Verwendung eines Materials nach Anspruch 21 oder 22 als Hochtemperatur-Isolationsmaterial insbesondere für die Isolierung einer Mauer, die auf eine hohe Temperatur gebracht wird oder als konstitutives Material einer Brandschutzbarriere.
